# EUROPÄISCHE PATENTSCHRIFT

(11) **EP 2 977 089 B1**
(45) Veröffentlichungstag und Bekanntmachung des Hinweises auf die Patenterteilung: **21.02.2018**
(21) Anmeldenummer: 15170529.0
(22) Anmeldetag: 03.06.2015
(51) Int. Cl.: B01D 35/027, B01D 24/16

(54) **FLUIDFILTERANORDNUNG UND FILTERVERFAHREN**
FLUID FILTER ASSEMBLY AND FILTERING METHOD
SYSTEME DE FILTRE DE FLUIDE ET PROCEDE DE FILTRAGE

(30) Priorität: 22.07.2014 DE 102014110325
(43) Veröffentlichungstag der Anmeldung: 27.01.2016
(73) Patentinhaber: GETRAG B.V. & Co. KG, 74199 Untergruppenbach (DE); NTZ Nederland B.V., 3047 BP Rotterdam (NL)
(72) Erfinder: Anzt, Christian, 71720 Oberstenfeld (DE); Castan, Reiner, 71711 Steinheim (DE); de Haas, Joeri, 2461 TK, Ter Aar (NL); Schaerlaeckens, Willy, 4854 KN, Bavel (NL)
(74) Vertreter: Witte, Weller & Partner Patentanwälte mbB

(56) Entgegenhaltungen:
- EP-A1- 2 364 762
- DE-A1- 19 738 067
- US-A- 1 941 311

## Beschreibung

Die vorliegende Erfindung betrifft eine Fluidfilteranordnung für einen Kraftfahrzeugantriebsstrang, mit einem Filtergehäuse, das einen Fluideinlass und einen Fluidauslass aufweist, so dass Fluid in einer Strömungsrichtung von dem Fluideinlass zu dem Fluidauslass strömen kann, und mit einem in dem Filtergehäuse angeordneten Filtereinsatz, der einen Innenraum des Filtergehäuses in einen mit dem Fluideinlass verbundenen Einlassbereich und einen mit dem Fluidauslass verbundenen Auslassbereich unterteilt, wobei der Filtereinsatz ein Filtermedium zur Filterung von Fluid aufweist.

Ferner betrifft die vorliegende Erfindung ein Verfahren zum Filtern eines Antriebsstrang-Fluides, insbesondere mittels einer Fluidfilteranordnung der oben bezeichneten Art, mit dem Schritt, ein Fluid durch ein Filtermedium hindurch zu fördern, das in einem Filtergehäuse angeordnet ist.

Getriebe von Kraftfahrzeugantriebssträngen beinhalten generell ein Fluid wie ein Öl, das zum Zwecke der Schmierung und/oder Kühlung verwendet wird. Neben der Tauchschmierung, bei der eine Schmierung bzw. Kühlung dadurch erfolgt, dass drehbare Elemente des Getriebes, wie Zahnräder, in einen Fluidsumpf eintauchen, ist auch eine Einspritzschmierung bekannt.

Im weitesten Sinne beinhaltet eine Einspritzschmierung eine Fluidversorgungseinrichtung, die Fluid aus dem Fluidsumpf fördert und gezielt an zu schmierende bzw. zu kühlende Stellen innerhalb des Getriebes fördert. Derartige Fluidversorgungseinrichtungen weisen in der Regel eine Pumpe auf, deren Saugseite mit dem Fluidsumpf verbunden ist.

Ferner ist es bekannt, in Getrieben von Kraftfahrzeugantriebssträngen hydraulische Aktuatoren vorzusehen, die bspw. zur Betätigung von einer Kupplungsanordnung und/oder zur Betätigung von Schaltkupptungen oder dergleichen dienen können. Der hierfür erforderliche Hydraulikdruck wird über eine Fluidversorgungseinrichtung erzeugt, die ebenfalls generell mit einer Pumpe ausgerüstet ist.

Fluidversorgungseinrichtungen der oben beschriebenen Art können Pumpen aufweisen, die mit einer Nebenantriebseinrichtung eines Antriebsmotors gekoppelt sind. Die Drehzahl der Pumpen entspricht dabei generell der Drehzahl des Antriebsmotors. Es ist jedoch auch bekannt, derartige Pumpen unabhängig von dem Antriebsmotor anzutreiben, bspw. mittels eines jeweiligen dedizierten Elektromotors, mittels dessen die Pumpe in einer oder zwei Drehrichtungen angetrieben werden kann. In letzterem Fall kann die Pumpe auch als Aktuatorpumpe verwendet werden, derart, dass der auf der Druckseite der Pumpe für einen hydraulischen Stellzylinder oder dergleichen bereit gestellte Druck mittels der Drehzahl der Pumpe geregelt wird. In diesem Fall ist es nicht notwendig, zwischen der Pumpe und dem Stellzylinder ein proportionales Druckregelventil oder dergleichen anzuordnen. Dies kann den Antriebsstrang insgesamt kostengünstiger gestalten, da ein so ausgebildeter Hydraulikzweig keine Proportionalventile erfordert, die nur bei erhöhten Reinheitsanforderungen in der Montageumgebung montierbar sind.

Bei den oben genannten Pumpen ist eine Saugseite generell mit einem Fluidsumpf verbunden. Der Fluidsumpf kann ein Fluidsumpf des Getriebes sein, kann jedoch auch ein kombinierter Fluidsumpf eines Getriebes und einer nasslaufenden Kupplungsanordnung sein, wie bspw. bei manchen Doppelkupplungsgetrieben.

Um zu vermeiden, dass die Pumpe aus dem Fluidsumpf Verunreinigungen ansaugt, ist die Saugseite der Pumpe in der Regel über eine Fluidfilteranordnung der eingangs beschriebenen Art mit dem Fluidsumpf verbunden, derart, dass ein Fluideinlass der Fluidfilteranordnung mit dem Sumpf verbunden ist und ein Fluidauslass der Fluidfilteranordnung mit einer Saugseite einer Pumpe einer solchen Fluidversorgungseinrichtung verbunden ist.

Vorzugsweise ist die in einem Filtergehäuse einer solchen Fluidfilteranordnung eingerichtete Hauptströmungsrichtung von dem Fluideinlass zu dem Fluidauslass von unten nach oben gerichtet, also gegen die Gravitation (bei bestimmungsgemäßen Gebrauch des Kraftfahrzeugantriebsstranges bzw. der Fluidfilteranordnung). Das Fluid kann dabei vertikal nach oben strömen, oder auch schräg nach oben durch das Filtermedium strömen.

In manchen Betriebszuständen eines solchen Kraftfahrzeugantriebsstranges kann es vorkommen, dass das Fluid in dem Fluidsumpf stark mit Luft oder anderen Gasen verschäumt ist. Insbesondere dann, wenn das Fluid mit relativ geringen Strömungsgeschwindigkeiten durch das Filtermedium hindurch gefördert wird, besteht die Möglichkeit, dass sich unterhalb des Filtermediums Luft oder ein anderes Gas aus dem Fluid abscheidet und sich dort zu größeren Blasen agglomeriert. Geringe Strömungsgeschwindigkeiten können insbesondere dann vorkommen, wenn eine Pumpe einer Fluidversorgungseinrichtung rein bedarfsorientiert angetrieben wird, also bspw. mittels eines Elektromotors.

Derartige Gasblasen (nachstehend auch als Luftblasen bezeichnet) können bei Erreichen von bestimmten Größen aufgrund der Auftriebskraft das Filtermedium durchdringen und schlagartig in eine ansaugende Pumpe gelangen. Dies kann dazu führen, dass der Hydraulikdruck auf der Druckseite einer Pumpe stark beeinträchtigt wird, was die Regelbarkeit eines solchen Druckes nachteilig beeinflussen kann, also insbesondere dann, wenn die Pumpe als Pumpenaktuator verwendet wird, wie oben beschrieben.

Gasblasen der oben beschriebenen Art können sich unterhalb des Filtermediums insbesondere in solchen Bereichen ansammeln, die aufgrund der Geometrie des Filtergehäuses oder dergleichen generell schlechter durchströmt sind als andere Bereiche.

Bei der Verwendung einer Pumpe als Pumpenaktuator ist der von der Pumpe angeforderte Volumenstrom während solcher Phasen, in denen der Druck fein bzw. genau geregelt wird, relativ gering, so dass sich gerade in solchen Phasen sehr geringe Strömungsgeschwindigkeiten in der Fluidfilteranordnung ergeben und damit das Risiko von Luftagglomerationen erhöht. Gerade in diesen Phasen kann jedoch ein schlagartiges Durchdringen einer Luftblase durch das Filtermedium besonders nachteilige Wirkungen haben, da der Hydraulikdruck auf der Druckseite der Pumpe hierdurch im Sinne einer Störgröße stark beeinträchtigt wird.

Eine Fluidfilteranordnung ist bspw. bekannt aus dem Dokument DE 102 96 703 T5.

Aus dem Dokument US 1,941,311 A ist ein Ölfilter mit den Merkmalen des Oberbegriffs des Anspruchs 1 bekannt geworden.

Vor dem obigen Hintergrund ist es eine Aufgabe der Erfindung, eine verbesserte Fluidfilteranordnung sowie ein verbessertes Verfahren zum Filtern eines Antriebsstrang-Fluides anzugeben, wobei vorzugsweise wenigstens einer der oben genannten Nachteile des Standes der Technik gefindert oder eliminiert wird.

Die obige Aufgabe wird durch eine Fluidfilteranordnung gemäß Anspruch 1 gelöst, wobei der Filtereinsatz eine Lochplatte mit einer Mehrzahl von Löchern aufweist, die in Strömungsrichtung vor dem Filtermedium angeordnet sind, wobei die Größe von wenigstens einem Teil der Löcher dazu angepasst ist, dass Fluid mit einer erhöhten Strömungsgeschwindigkeit auf das Filtermedium auftrifft.

Ferner wird die obige Aufgabe gelöst durch ein Filterverfahren gemäß Anspruch 10. Dieses zeichnet sich durch den Schritt aus, dass das Fluid während des Filtervorganges auf der Einlassseite lokal beschleunigt wird, so dass es mit einer erhöhten Geschwindigkeit auf das Filtermedium auftrifft.

Dadurch, dass das Fluid mit einer erhöhten Strömungsgeschwindigkeit auf das Filtermedium auftrifft, wird das Risiko verringert, dass sich Luftblasen an der Unterseite des Filtermediums bilden. Hierdurch kann das Risiko verringert werden, dass solche Luftblasen während eines Filtervorganges schlagartig durch das Filtermedium hindurch brechen und in eine ansaugende Pumpe gelangen.

Das Filtermedium ist vorzugsweise ein sich generell über einer Fläche erstreckendes Medium, wie bspw. ein fliesartiges Medium oder dergleichen. Das Filtermedium kann dabei eine über die Fläche einheitliche Struktur haben, kann jedoch auch in sich gewellt sein, wie es bspw. in dem oben beschriebenen Stand der Technik offenbart ist. Das Filtermedium kann bspw. ein filzartiges nicht-gewebtes Textil sein, das Nylonfasern, Polyesternfasern oder Ähnliches beinhaltet. Es versteht sich, dass das Filtermedium insbesondere temperaturbeständigung sollte, da das Fluid in einem Antriebsstrang durchaus Temperaturen im Bereich von 150 °C erreichen kann.

Die Löcher sind vorzugsweise über die Filterfläche des Filtermediums verteilt angeordnet. Die Anzahl der Löcher kann in einem Bereich von 6 bis 200 liegen, insbesondere in einem Bereich von 20 bis 150, besonders bevorzugt in einem Bereich von 40 bis 120.

Die Lochplatte kann bspw. eine im Wesentlichen rechteckige Platte sein, wobei in einer Richtung 2 bis 10 Löcher hintereinander angeordnet sind, und in einer Richtung quer hierzu 3 bis 25 Löcher hintereinander angeordnet sind.

Die Lochplatte ist vorzugsweise so angeordnet, dass die Löcher von dem Filtermedium in Strömungsrichtung beabstandet sind. Der Abstand ist vorzugsweise über die Fläche des Filtermediums einheitlich. Beispielsweise kann der Abstand zwischen dem Lochausgang und der Oberfläche des Filtermediums in einem Bereich von 0,5 mm bis 40 mm liegen, insbesondere in einem Bereich von 1 mm bis 30 mm.

Gemäß der Erfindung wird folglich erreicht, dass sich stark mit Luft oder einem Gas verschäumtes Fluid unterhalb des Filtermediums während eines Filtervorganges schnell bewegen kann, so dass sich aufgrund einer erhöhten Strömungsgeschwindigkeit keine Luft bzw. ein anderes Gas an der Unterseite des Filtermediums abscheiden kann.

Bei einer Ausführungsform ist es bevorzugt, wenn das Filtermedium im Wesentlichen horizontal angeordnet ist. Unter einer horizontalen Anordnung wird vorliegend verstanden, dass das Filtermedium gegenüber einer zur Gravitation senkrecht angeordneten Horizontale einen Winkel im Bereich von 0° bis 45° einnimmt, vorzugsweise einen Winkel von < 30°.

Ferner ist es vorteilhaft, wenn die Löcher jeweils eine Querschnittsfläche im Bereich von 0,1 mm² bis 20 mm² aufweisen, insbesondere im Bereich von 0,2 mm² bis 7 mm².

Gemäß einer weiteren bevorzugten Ausführungsform sind die Löcher gleichmäßig bzw. rasterförmig in Bezug auf das Filtermedium angeordnet.

Erfindungsgemäß ist die Querschnittsfläche der Löcher, über die Fläche des Filtermediums gesehen, variabel und jeweils so gewählt, dass die Strömungsgeschwindigkeit des Fluides, über die Fläche des Filtermediums gesehen, annähernd gleich groß ist.

Mit anderen Worten wird bspw. davon ausgegangen, dass der Fluideinlass und der Fluidauslass lokal sind und generell eine kleinere Fläche aufweisen als das Filtermedium. Innerhalb des Filtergehäuses ergibt sich daher abhängig von der Geometrie des Filtergehäuses sowie der Anordnung des Filtereinsatzes in Bezug auf die Horizontale ein Strömungsverlauf, der dazu führen kann, dass das Filtermedium in manchen Bereichen mit einer anderen Geschwindigkeit durchströmt werden könnte als in anderen Bereichen. Die Querschnittsfläche der Löcher kann nun vorzugsweise so gewählt werden, dass die Strömungsgeschwindigkeit des Fluides, über die Fläche des Filtermediums gesehen, annähernd gleich groß wird. Dies kann beinhalten, dass die Querschnittsfläche der Löcher in solchen Bereichen, die aufgrund von Geometrie des Gehäuses oder anderen Randbedingungen zu einer relativ geringen Strömungsgeschwindigkeit durch das Filtermedium hindurch führen würden, relativ gesehen größer ausgebildet wird. In solchen Bereichen hingegen, bei denen aufgrund von Geometrie des Gehäuses etc. die Strömungsgeschwindigkeit ohnehin relativ groß ist, kann die Querschnittsfläche der Löcher relativ gesehen kleiner ausgebildet werden.

Insgesamt wird durch diese Maßnahme erreicht, dass das Filtermedium unabhängig von Geometrie oder anderen Randbedingungen mit im Wesentlichen einer identischen Strömungsgeschwindigkeit durchströmt wird, derart, dass Bereiche unterhalb des Filtermediums mit relativ gesehen sehr geringen Strömungsgeschwindigkeiten vermieden werden. Folglich kann erreicht werden, dass das Risiko einer Luftblasenansammlung in solchen Bereichen deutlich verringert ist.

Um eine über die Fläche des Filtermediums gesehen weitgehend einheitliche Strömungsgeschwindigkeit zu erreichen, ist es alternativ oder zusätzlich zu den oben genannten Maßnahmen auch möglich, die Dichte der Löcher über die Fläche des Filtermediums gesehen variabel zu gestalten, also bspw. die Anzahl der Löcher in solchen Bereichen des Filtermediums, wo die Geschwindigkeit aufgrund der Konstruktion gering sein könnte, größer zu wählen als in solchen Bereichen, bei denen die Strömungsgeschwindigkeit konstruktiv bedingt ohnehin relativ gesehen groß ist. Sämtliche folgenden Bezugnahmen auf unterschiedlich große Querschnittsflächen von Löchern in der Lochplatte sollen sich folglich gleichwertig auf unterschiedlich große Lochdichten (Anzahl der Löcher pro Einheitsfläche des Filtermediums) beziehen.

Gemäß einer weiteren bevorzugten Ausführungsform weist dabei das Filtergehäuse eine Längserstreckung mit einem ersten Längsende und einem zweiten Längsende auf, wobei der Fluideinlass im Bereich des ersten Längsendes ausgebildet ist, wobei der Fluidauslass im Bereich des zweiten Längsendes ausgebildet ist, und wobei die Querschnittsfläche von zumindest einigen der Löcher im Bereich des zweiten Längsendes größer ist als jene von Löchern in dem Bereich des ersten Längsendes.

Gemäß einer weiteren bevorzugten Ausführungsform weist das das Filtergehäuse eine Quererstreckung mit einer ersten Querseite und einer zweiten Querseite auf, wobei der Fluideinlass und/oder der Fluidauslass im Bereich der ersten Querseite ausgebildet ist bzw. sind und wobei die Querschnittsfläche von zumindest einigen der Löcher im Bereich der zweiten Querseite größer ist als jene von Löchern im Bereich der ersten Querseite.

Durch die oben beschriebenen Maßnahmen kann vorzugsweise erreicht werden, dass das Filtermedium im Betrieb mit einer weitgehend gleichförmigen Strömungsgeschwindigkeit durchströmt wird.

Gemäß einer weiteren bevorzugten Ausführungsform weist der Filtereinsatz ein Kassettenelement auf, das eine Mehrzahl von Kassetten bildet, die sich von dem Filtermedium zum Einlassbereich hin erstrecken.

Das Filtermedium weist folglich auf der Saugseite eine Mehrzahl von Kassetten auf, so dass das Filtermedium an seiner Unterseite aufgrund des Kassettenelementes nach der Art einer Kassettendecke ausgebildet ist.

Die Form der Kassetten kann quadratisch sein, kann jedoch auch rechteckförmig, kreisförmig, polygonal oder sonstwie geformt sein.

Die Kassetten weisen jeweils ausgehend von der Oberfläche des Filtermediums eine Erstreckung entgegen der Strömungsrichtung auf, die in einem Bereich von 0,5 mm bis 30 mm liegen kann, insbesondere in einem Bereich von 1 mm bis 20 mm.

Durch die so gebildeten Kassetten kann erreicht werden, dass sich ggf. im Filterbetrieb an der Unterseite des Filtermediums ansammelnde Luftblasen bestimmte Größen nicht überschreiten können, wobei diese Größe insbesondere eine Funktion der Form und/oder des Volumens der Kassetten ist.

Das erfindungsgemäße Verfahren beinhaltet gemäß der bevorzugten Ausführungsform den Schritt, das Fluid in einem in Strömungsrichtung vor dem Filtermedium liegenden Raum in eine Mehrzahl von Einzelströmen zu unterteilen, die durch Wände von Kassetten voneinander abgegrenzt sind.

Jeder Einzelstrom kann dabei unterhalb des Filtermediums zwischen den Wänden der jeweiligen Kassetten ein maximales Stauvolumen bilden, das in der Regel auch die maximale Größe einer Luftblase begrenzt, die durch das Filtermedium schlagartig hindurchtreten könnte. Auch durch diese Maßnahme kann folglich erreicht werden, dass die Gefahr gelinderi wird, dass Luftblasen einer signifikanten Größe schlagartig durch das Filtermedium hindurch brechen, was die Hydraulikdruck-Stellbarkeit auf der Druckseite einer angeschlossenen Pumpe negativ beeinträchtigen könnte.

Es ist ferner bevorzugt, wenn in Strömungsrichtung gesehen, das Kassettenelement zwischen dem Filtermedium und der Lochplatte angeordnet ist.

Ferner ist es hierbei bevorzugt, wenn zumindest einigen der Kassetten genau ein Loch der Lochplatte zugeordnet ist.

Hierdurch ergibt sich ein synergistischer Effekt.

Gemäß einer weiteren insgesamt bevorzugten Ausführungsform bilden wenigstens einige der Kassetten zusammen mit der Lochplatte jeweils eine Kassettenkammer.

Die Kassettenkammer wird folglich zum einen durch die Lochplatte, zum anderen durch das Filtermedium und seitlich durch Wände der Kassetten begrenzt. Fluid kann in die Kassettenkammer vorzugsweise ausschließlich durch eines oder mehrere Löcher der Lochplatte eindringen und kann aus der Kassettenkammer heraus vorzugsweise ausschließlich durch das Filtermedium hindurch abgeführt werden, so dass vorzugsweise ein Queraustausch von Fluid zwischen benachbarten Kassettenkammern weitgehend vermieden ist, vorzugsweise vollständig ausgeschlossen ist. Jedenfalls sind die Kassettenkammern so ausgebildet, dass im Filterbetrieb ein deutlich größerer Anteil des über ein Loch zugeführten Fluides über das Filtermedium abgeführt wird als in Querrichtung hin zu einer benachbarten oder mehreren benachbarten Kassettenkammern.

Ferner ist es insgesamt bevorzugt, wenn wenigstens einige der Kassetten oder der Kassettenkammern ein Volumen haben, das im Bereich von 10 mm³ bis 5000 mm³ liegt.

Insgesamt wird mit der vorliegenden Erfindung vorzugsweise wenigstens einer der nachstehend beschriebenen Vorteile erreicht. Insbesondere dann, wenn das Filtermedium im bestimmungsgemäßen Gebrauch einen Neigungswinkel gegenüber der Horizontalen hat, der größer ist als 0°, könnte es im Stand der Technik dazu kommen, dass abgeschiedene Luft an der Unterseite des Filtermediums aufgrund von Auftriebskräften hin zu einem schlecht durchströmten Bereich aufsteigt und sich dort zu größeren Luftvolumina ansammelt. Dieses Problem kann erfindungsgemäß vorzugsweise gelindert werden. Insgesamt kann erreicht werden, dass sich stark mit Luft verschäumtes Fluid unterhalb des Filtermediums so schnell bewegt, dass sich keine oder weniger Luft abscheiden kann und/oder entstehende Luftblasen eine bestimmte Größe nicht überschreiten können. Ferner kann vorzugsweise erreicht werden, dass Öl innerhalb des Filtergehäuses gezielt in Bereiche mit, konstruktiv gesehen, geringen Strömungsgeschwindigkeiten gelenkt wird, um dort das Risiko von Luftagglomeration deutlich zu verringern.

Generell ist es auch denkbar, ein Kassettenelement auf der Oberseite des Filtermediums vorzusehen, insbesondere dann, wenn das Filtermedium von oben nach unten durchströmt wird. Ferner können solche Kassettenelemente auch auf Ober- und Unterseite des Filtermediums vorgesehen sein.

Bei Verwendung der Fluidfilteranordnung in einem Kraftfahrzeugantriebsstrang, und zwar insbesondere in einer Pumpenaktuatoranordnung zur Kupplungsdruckregelung, oder bei anderen hydraulischen Aktuatoren, ergeben sich durch die Erfindung besondere Vorteile. Denn aufgrund der bei solchen Pumpenaktuatoren und anderen Aktuatoren vergleichsweise geringen Ansaugvolumenströme können die eingangs beschriebenen Probleme vorzugsweise gelindert werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Kraftfahrzeugantriebsstranges mit einer Ausführungsform einer erfindungsgemäßen Fluidfilteranordnung;
- Fig. 2: eine schematische Schnittansicht einer weiteren Ausführungsform einer erfindungsgemäßen Fluidfilteranordnung;
- Fig. 2a: eine alternative Ausführungsform einer Lochplatte für die Fluidfilteranordnung der Fig. 2;
- Fig. 3: eine Darstellung eines Details III der Fig. 2;
- Fig. 4: eine der Fig. 2 vergleichbare Darstellung einer weiteren Ausführungsform einer erfindungsgemäßen Fluidfilteranordnung;
- Fig. 5: eine perspektivische und in Längsrichtung geschnittene Darstellung einer weiteren Ausführungsform einer erfindungsgemäßen Fluidfilteranordnung;
- Fig. 6: eine perspektivische Darstellung einer Lochplatte der Fluidfilteranordnung der Fig. 5; und
- Fig. 7: eine perspektivische Darstellung eines Kassettenelementes der Fluidfilteranordnung der Fig. 5.

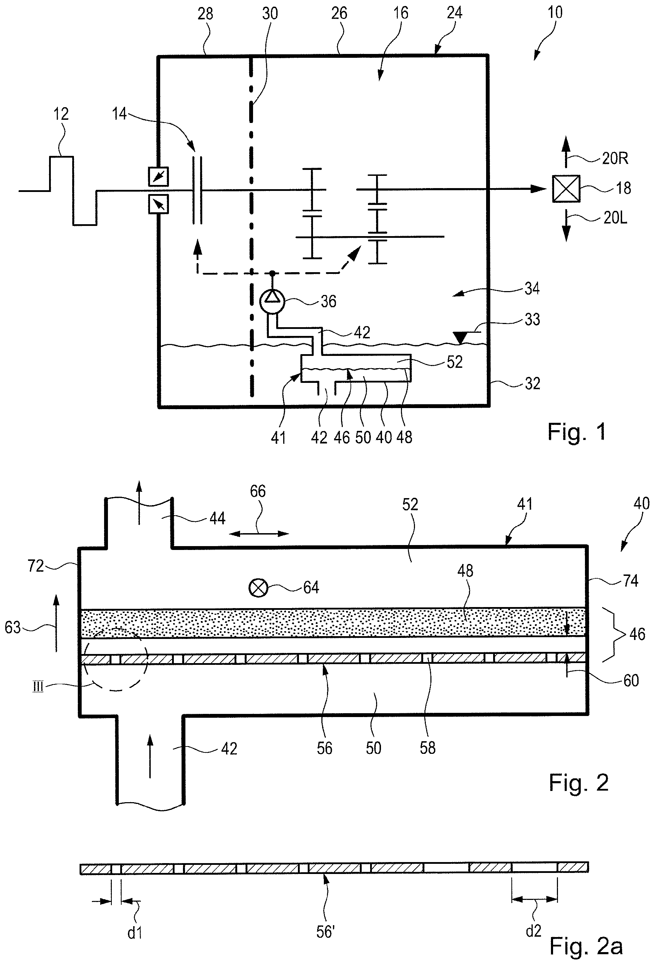

In Fig. 1 ist in schematischer Form ein Antriebsstrang für ein Kraftfahrzeug dargestellt und generell mit 10 bezeichnet. Der Antriebsstrang 10 beinhaltet einen Antriebsmotor 12 wie einen Verbrennungsmotor oder eine Hybrid-Antriebseinheit. Ferner weist der Antriebsstrang 10 eine Kupplungsanordnung 14 auf, deren Eingang mit dem Antriebsmotor 12 verbunden ist und deren Ausgang mit einem Getriebe 16 verbunden ist. Das Getriebe 16 kann als Stufengetriebe ausgebildet sein, insbesondere in Vorgelegebauweise, kann jedoch auch als Wandler-Automatikgetriebe ausgebildet sein, als stufenloses Getriebe oder dergleichen. Ein Ausgang des Getriebes 16 ist mit einem Differential 18 verbunden, mittels dessen Antriebsleistung auf angetriebene Räder 20L, 20R verteilt wird.

Eine Gehäuseanordnung 24 beinhaltet ein Getriebegehäuse 26 und ein Kupplungsgehäuse 28. Das Getriebegehäuse 26 und das Kupplungsgehäuse 28 können über eine Trennwand 30 räumlich und fluidisch voneinander getrennt sein. Eine derartige Trennwand 30 ist jedoch optional. Das Getriebegehäuse 26 und das Kupplungsgehäuse 28 können hingegen auch einen gemeinsamen Fluidsumpf 32 aufweisen, dessen Sumpfpegel in Fig. 1 bei 33 angedeutet ist. Im Falle des Bereitstellens einer Trennwand 30 können in dem Getriebegehäuse 26 und in dem Kupplungsgehäuse 28 auch unterschiedliche Fluide aufgenommen sein. Vorzugsweise ist jedoch in der Gehäuseanordnung 24 ein gemeinsamer Fluidsumpf 32 vorgesehen, wobei das Fluid bspw. ein ATF-Öl sein kann.

Der Kupplungsanordnung 14 und/oder dem Getriebe 16 ist eine Fluidversorgungseinrichtung 34 zugeordnet. Die Fluidversorgungseinrichtung 34 beinhaltet eine Pumpenanordnung 36, mittels der Fluid für die Kupplungsanordnung 14 und/oder das Getriebe 16 bereitgestellt wird. Die Fluidversorgungseinrichtung 34 kann dazu eingerichtet sein, Fluid zu Schmier- und/oder Kühlzwecken bereitzustellen. Die Fluidversorgungseinrichtung 34 ist jedoch vorzugsweise dazu ausgebildet, mittels der Pumpenanordnung 36 einen Fluiddruck zum Betätigen von Hydraulikaktuatoren bereitzustellen, die bspw. dazu verwendet werden können, die Kupplungsanordnung 14 und/oder Schaltkupplungen des Getriebes 16 zu betätigen. Das Getriebe 16 kann ein Doppelkupplungsgetriebe sein. Die Kupplungsanordnung 14 kann eine einfache Kupplung sein, kann jedoch auch eine Doppelkupplungsanordnung sein.

Die Pumpenanordnung 36 weist einen mit dem Getriebe 16 und/oder der Kupplungsanordnung 14 verbundenen, nicht näher bezeichneten Druckanschluss sowie einen Sauganschluss auf, der über eine Fluidfilteranordnung 40 mit dem Fluidsumpf 32 verbunden ist.

Die Fluidfilteranordnung 40 dient dazu, das von der Pumpenanordnung 36 angesaugte Fluid zu filtern, bevor es in die Pumpenanordnung 36 bzw. in Aktuatorelemente oder dergleichen gelangt.

Die Fluidfilteranordnung 40 beinhaltet ein Filtergehäuse 41, an dem ein Fluideinlass 42 und ein Fluidauslass 44 ausgebildet sind. Der Fluideinlass 42 ist unmittelbar mit dem Fluidsumpf 32 verbunden. Der Fluidauslass 44 ist mit dem Sauganschluss der Pumpenanordnung 36 verbunden. In dem Filtergehäuse 41 ist ein Filtereinsatz 46 eingesetzt. Der Filtereinsatz 46 beinhaltet ein Filtermedium 48, bei dem es sich um eine filzartige, fliesartige oder eine sonstige Filterstruktur handeln kann, insbesondere aus einem nicht-gewebten Textil, das Nylonfasern, Polyesterfasern oder Ähnliches beinhaltet. Bevorzugt ist das Filtermedium ein Sieb aus gewebtem Metall.

Der Filtereinsatz 46 unterteilt den Innenraum des Filtergehäuses 41 in einen Einlassbereich 50 und einen Auslassbereich 52.

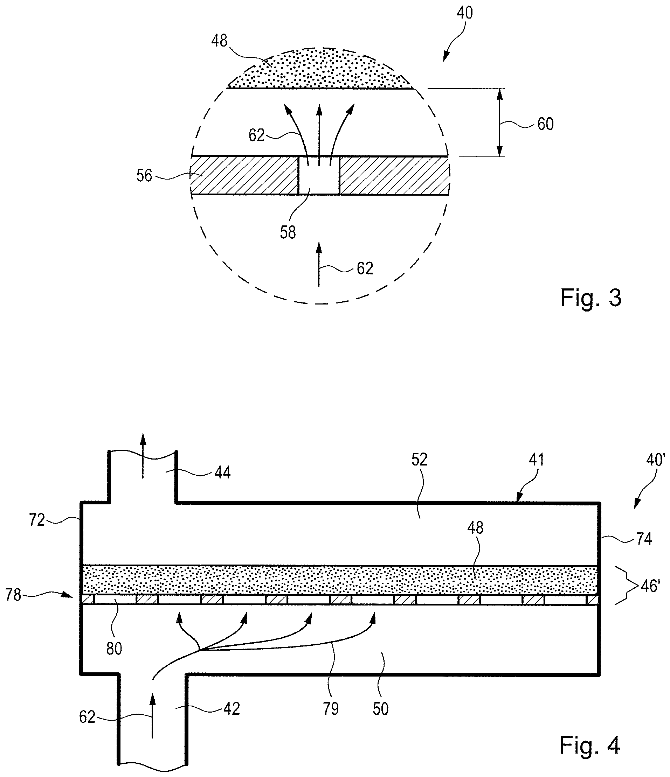

Der Filtereinsatz 46 beinhaltet ferner eine Lochplatte, wie es nachstehend anhand der Figuren 2 bis 3 erläutert wird, und/oder ein Kassettenelement, wie es insbesondere anhand von Fig. 4 erläutert wird.

Nachstehend werden weitere Ausführungsformen von Fluidfilteranordnungen erläutert, die hinsichtlich Aufbau und Funktionsweise generell der unter Bezugnahme auf Fig. 1 beschriebenen Fluidfilteranordnung 40 entsprechen können. Gleiche Elemente sind daher durch gleiche Bezugszeichen gekennzeichnet. Im Folgenden werden im Wesentlichen die Unterschiede erläutert.

Eine Fluidfilteranordnung 40 gemäß einem ersten Aspekt der vorliegenden Erfindung ist in den Figuren 2, 2a, 3 gezeigt. Bei dieser Fluidfilteranordnung 40 beinhaltet der Filtereinsatz 46 eine Lochplatte 56, die eine Mehrzahl von über die Fläche der Lochplatte 56 verteilt angeordnete Löcher 58 aufweist. Die Lochplatte 56 ist mit einem Abstand 60 in Bezug auf das Filtermedium 48 angeordnet, wobei der Abstand 60 vorzugsweise größer ist als 0 mm und bspw. in einem Bereich von 0,5 mm bis 40 mm liegen kann, insbesondere in einem Bereich von 1 mm bis 30 mm.

Der Filtereinsatz 46 ist in dem Filtergehäuse 41 so montiert, dass er im Wesentlichen horizontal ausgerichtet ist, d.h. in einem Winkelbereich von ± 20° in Bezug auf eine Horizontale. Ferner sind der Fluideinlass 42 und der Fluidauslass 44 so angeordnet, dass aus dem Fluidsumpf 32 angesaugtes Fluid den Filtereinsatz 46 von unten nach oben, also gegen die Gravitation durchströmt. Die hierdurch eingerichtete Strömungsrichtung ist in Fig. 2 mit 63 bezeichnet. Die Lochplatte 56 ist, in Strömungsrichtung 63 gesehen, vor dem Filtermedium 48 angeordnet.

Fig. 3 zeigt eine vergrößerte Darstellung eines Details III der Fig. 2. Man erkennt, dass auf der Saugseite der Lochplatte 56 angesaugtes Fluid durch die Löcher 58 gedrückt wird, die nach der Art einer Blende dafür sorgen, dass sich die Strömungsgeschwindigkeit des Fluides erhöht, so dass dieses mit einer erhöhten Geschwindigkeit auf das Filtermedium 48 auftrifft. Hierdurch kann erreicht werden, dass die Gefahr verringert wird, dass sich an der Unterseite des Filtermediums 48 Luftblasen abscheiden, was bspw. aufgrund einer geringen Strömungsgeschwindigkeit erfolgen kann. Die Löcher 58 können dabei jeweils als Drosselgeräte nach der Art einer Blende oder einer Düse ausgebildet sein.

Die Anzahl der Löcher 58 in der Lochplatte 56 kann im Bereich von 6 bis 200 liegen. Vorzugsweise sind die Löcher gleichmäßig über die Fläche der Lochplatte 56 verteilt angeordnet. Insbesondere ergibt sich hierbei eine rasterförmige Anordnung der Löcher 58 in einer Längserstreckung 64 und in einer Quererstreckung 66.

Der Filtereinsatz 46 weist ein erstes Längsende und ein zweites Längsende auf, wobei diese Längsenden in Fig. 2, 2a und 3 nicht dargestellt sind, da sie nicht in der Zeichnungsebene liegen. Ferner weist der Filtereinsatz 46 eine erste Querseite 72 und eine zweite Querseite 74 auf.

Vorliegend sind der Fluideinlass 42 und der Fluidauslass 44 im Bereich der ersten Querseite 72 angeordnet. Die Löcher 58 können alle eine einheitliche Querschnittsfläche aufweisen. Es ist jedoch auch möglich, die Löcher, über die Fläche der Lochplatte 56 gesehen, mit unterschiedlichen Querschnittsflächen auszubilden, wie es in Fig. 2a durch unterschiedliche Durchmesser d₁ und d₂ angedeutet ist, und zwar für eine abgewandelte Form einer Lochplatte 56'. Insbesondere ist es möglich, die Löcher in solchen Bereichen mit einer größeren Querschnittsfläche auszubilden, bei denen aufgrund der sonstigen konstruktiven Randbedingungen eine relativ gesehen geringere Strömungsgeschwindigkeit vorliegen würde. Im Falle der Fig. 2 könnte dies bspw. der Bereich benachbart zu der zweiten Querseite 74 sein. Demzufolge sind in diesem Bereich bei der Lochplatte 56' der Fig. 2a die Löcher mit einem größeren Durchmesser d₂ ausgebildet als die Löcher, die im Bereich der ersten Querseite 72 angeordnet sind (siehe d₁).

Gleichermaßen ist es alternativ oder zusätzlich auch möglich, die Querschnittsfläche der Löcher in Längserstreckung 64 gesehen unterschiedlich zu gestalten. Falls bspw. der Fluideinlass 42 und/oder der Fluidauslass 44 im Bereich von einem ersten Längsende ausgebildet sind, könnten im Bereich von einem zweiten Längsende die Löcher mit einem größeren Querschnitt ausgebildet sein.

Durch diese Maßnahme kann ggf. erreicht werden, dass die Strömungsgeschwindigkeit des Fluides, so, wie es über die Fläche des Filtermediums 48 gesehen, auf das Filtermedium 48 auftrifft, im Wesentlichen vereinheitlicht wird. Dies kann dazu beitragen, dass Bereiche vermieden werden, in denen Fluid mit sehr geringen Strömungsgeschwindigkeiten auf das Filtermedium 48 auftrifft, was zu einer Luftblasenbildung an der Unterseite des Filtermediums 48 führen könnte.

Eine weitere Fluidfilteranordnung 40' gemäß einem zweiten Aspekt der vorliegenden Erfindung ist in Fig. 4 dargestellt. Hierbei ist an der Unterseite des Filtermediums 48 ein Kassettenelement 78 ausgebildet, das eine Mehrzahl von Kassetten 80 bildet, die sich von dem Filtermedium 48 zu der Saugseite hin, d.h. zu dem Einlassbereich 50 hin erstrecken. Hierdurch wird der Volumenstrom des Fluides 62 über die einzelnen Kassetten 80 in eine Mehrzahl von Einzelströmen 79 unterteilt. Die Kassetten 80 können dabei ein Wandern von Luftblasen in einer Richtung quer zu der Strömungsrichtung 63 an der Unterseite des Filtermediums 48 verhindern. Ferner können sie ggf. verhindern, dass sich Luftblasen mit einer Größe bilden, die größer ist als das Volumen der jeweiligen Kassetten 80. Die Kassetten 80 erstrecken sich vorzugsweise unmittelbar von dem Filtermedium 48 in Richtung hin zu dem Einlassbereich 50, so dass der so gebildete Filtereinsatz 46' von der Unterseite wie eine Kassettendecke ausgebildet ist. Das Kassettenelement könnte auch als Waffelelement bezeichnet werden. Das Kassettenelement 78 kann auch an der Oberseite des Filtermediums 48 entsprechende Kassetten aufweisen, obgleich dies in Fig. 4 nicht dargestellt ist. Das Filtermedium 48 und das Kassettenelement 78 können vorab hergestellt sein, derart, dass das Filtermedium 48 und das Kassettenelement 78 als ein Teil in dem Filtergehäuse 41 montiert werden können.

Bei den obigen Ausführungsformen können das Kassettenelement 78 und die Lochplatte 56 jeweils aus Kunststoff hergestellt sein. Auch das Filtergehäuse 41 kann aus Kunststoff hergestellt sein.

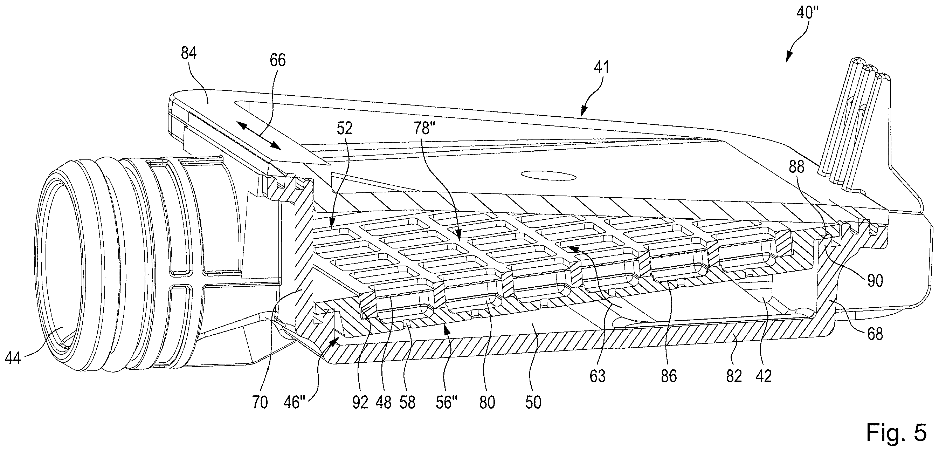

In den nachfolgenden Figuren 5 bis 7 ist eine weitere Ausführungsform einer Fluidfilteranordnung 40" gezeigt, die den ersten und den zweiten Aspekt der Erfindung miteinander kombiniert. Der Aufbau und die Funktionsweise der Fluidfilteranordnung 40" entsprechen daher in Kombination den oben beschriebenen Fluidfilteranordnungen. Gleiche Elemente sind daher durch gleiche Bezugszeichen gekennzeichnet. Im Folgenden werden im Wesentlichen die Unterschiede erläutert.

Das Filtergehäuse 41 weist bei der Fluidfilteranordnung 40" eine Unterschale 82 und eine Oberschale 84 auf. Der Filtereinsatz 46 ist an seinem Umfang abgedichtet mit der Unterschale 82 verbunden. Der Filtereinsatz 46 ist in dem Filtergehäuse 41 geneigt eingebaut, und zwar geneigt um eine Querachse, so dass der Filtereinsatz 46 im Bereich von einem ersten Längsende 68 höher liegt als in einem Bereich von einem zweiten Längsende 70. Der Fluideinlass 42 ist im Bereich des ersten Längsendes 68 ausgebildet. Der Fluidauslass 44 ist im Bereich des zweiten Längsendes 70 ausgebildet. Durch die schräge Anordnung des Filtereinsatzes 46 können Längsachsen von Fluideinlass 42 und Fluidauslass 44 konzentrisch zueinander liegen, oder zumindest nahe aneinander liegen.

Bei dem Filtereinsatz 46" sind die Lochplatte 56" und das Kassettenelement 78" so miteinander kombiniert, dass jeweilige Kassettenkammern 86 gebildet werden. Die Lochplatte 56" ist in Strömungsrichtung 63 gesehen vor dem Kassettenelement 78" angeordnet, wobei vorzugsweise jeder Kassette 80 bzw. jeder Kassettenkammer 86 ein Loch 58 der Lochplatte 56" zugeordnet ist. Mit anderen Worten strömt Fluid von der Einlassseite durch ein zugeordnetes Loch in eine jeweilige Kassettenkammer 86, die begrenzt ist durch die Lochplatte 56", durch Seitenwände der Kassetten 80 des Kassettenelementes 78 und durch das Filtermedium 48. Das Volumen der Kassettenkammern kann in einem Bereich von 50 mm³ bis 500 mm³ liegen. Durch die Maßnahme, dass die Kassettenkammern 86, bis auf die fluidzuführenden Löcher 58, jeweils geschlossen sind, können an der Unterseite des Filtermediums 48 keine größeren Luftblasen entstehen als das Volumen der jeweiligen Kassettenkammern 86 vorgibt. Ferner kann ein Wandern von Luftblasen entgegen der Gravitation, also schräg nach oben von dem zweiten Längsende 70 hin zu dem ersten Längsende 68 verhindert werden.

Die Lochplatte 56" weist einen umfänglichen Dichtflansch 88 auf, der auf einem Dichtsteg 90 der Unterschale 82 des Filtergehäuses 41 aufliegt. Der Dichtflansch 88 und der Dichtsteg 90 können über Befestigungsmittel miteinander verbunden sein, können jedoch auch verklebt sein oder thermoplastisch verschweißt sein. In gleicher Weise können die Unterschale 82 und die Oberschale 84 miteinander verbunden sein.

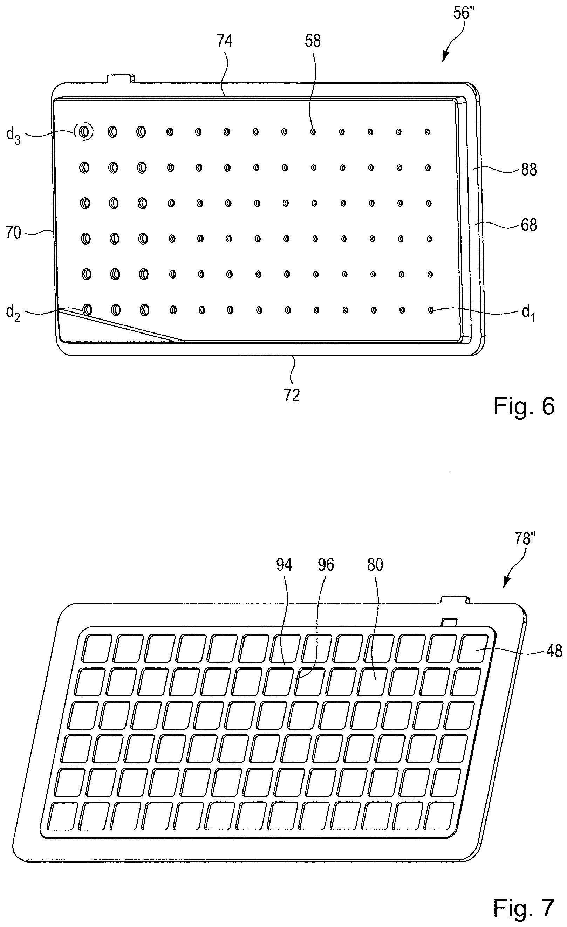

Die Lochplatte 56" weist auf der Seite, die der in Fig. 6 gezeigten Seite gegenüberliegt, eine Aufnahme 92 zum Einsetzen des Kassettenelementes 78" auf, derart, dass dieses bündig in die Lochplatte 56" eingesetzt werden kann, wie es in Fig. 5 dargestellt ist. Nicht näher bezeichnete Nasen können für eine korrekte Ausrichtung sorgen. Die Lochplatte 56" kann dabei im Bereich des ersten Längsendes 68, also nahe dem Fluideinlass 42, Löcher mit einem kleineren Durchmesser d₁ aufweisen als jene Löcher, die benachbart zu dem zweiten Längsende 70 angeordnet sind (durch d₂ angedeutet). Gegebenenfalls kann auch in Richtung der Quererstreckung eine graduelle Durchmesserveränderung erfolgen, wie es in Fig. 6 durch d₃ angedeutet ist. Die Querschnittsflächen der Löcher 58 sind vorzugsweise so gewählt, dass eine Strömungsgeschwindigkeit des Fluides, über die Fläche des Filtermediums 48 gesehen, annähernd gleich groß ist.

Das Kassettenelement 78" weist zur Bildung der Kassetten 80 eine Mehrzahl von Längsstegen 94 und eine Mehrzahl von Querstegen 96 auf, die einander kreuzen und auf diese Weise die Kassettenstruktur bilden. Das Filtermedium 48 ist vorzugsweise in das Kassettenelement 78" integriert, wie es auch in Fig. 5 dargestellt ist. Fig. 5 zeigt ferner, dass sich die Kassettenstruktur auch auf der Oberseite (d.h. zum Fluidauslass 44 hin) fortsetzen kann. Dies kann eine Vormontage des Filtermediums 48 an dem Kassettenelement 78" vereinfachen, ermöglicht jedoch ggf. auch einen Betrieb der Fluidfilteranordnung 40" in entgegengesetzter Strömungsrichtung.

## Patentansprüche

1. Fluidfilteranordnung (40) für einen Kraftfahrzeugantriebsstrang (10), mit
- einem Filtergehäuse (41), das einen Fluideinlass (42) und einen Fluidauslass (44) aufweist, so dass Fluid (62) in einer Strömungsrichtung (63) von dem Fluideinlass (42) zu dem Fluidauslass (44) strömen kann,
- einem in dem Filtergehäuse (41) angeordneten Filtereinsatz (46), der einen Innenraum des Filtergehäuses (41) in einen mit dem Fluideinlass (42) verbundenen Einlassbereich (50) und einen mit dem Fluidauslass (44) verbundenen Auslassbereich (52) unterteilt, wobei der Filtereinsatz (46) ein Filtermedium (48) zur Filterung von Fluid (42) aufweist,
wobei der Filtereinsatz (46) eine Lochplatte (56) mit einer Mehrzahl von Löchern (58) aufweist, die in Strömungsrichtung (63) vor dem Filtermedium (48) angeordnet sind, wobei die Größe von wenigstens einem Teil der Löcher (58) dazu angepasst ist, dass Fluid (62) mit einer erhöhten Strömungsgeschwindigkeit auf das Filtermedium (48) auftrifft
**dadurch gekennzeichnet, dass** die Querschnittsfläche der Löcher (58) über die Fläche des Filtermediums (48) variabel und so gewählt ist, dass die Strömungsgeschwindigkeit des Fluides (62) über der Fläche des Filtermediums (48) annähernd gleich groß ist.

2. Fluidfilteranordnung nach Anspruch 1, **dadurch gekennzeichnet, dass** das Filtermedium (48) im Wesentlichen horizontal angeordnet ist.

3. Fluidfilteranordnung nach Anspruch 1 oder 2, **dadurch gekennzeichnet, dass** die Löcher (58) jeweils eine Querschnittsfläche im Bereich von 0,1 mm² bis 20 mm² aufweisen, insbesondere im Bereich von 0,2 mm² bis 7 mm².

4. Fluidfilteranordnung nach einem der Ansprüche 1 - 3, **dadurch gekennzeichnet, dass** das Filtergehäuse (41) eine Längserstreckung mit einem ersten Längsende (68) und einem zweiten Längsende (70) aufweist, wobei der Fluideinlass (42) im Bereich des ersten Längsendes (68) ausgebildet ist, wobei der Fluidauslass (44) im Bereich des zweiten Längsendes (70) ausgebildet ist und wobei die Querschnittsfläche von zumindest einigen der Löcher (58) im Bereich des zweiten Längsendes (70) größer ist als jene von Löchern (58) in dem Bereich des ersten Längsendes (68).

5. Fluidfilteranordnung nach einem der Ansprüche 1 - 4, **dadurch gekennzeichnet, dass** das Filtergehäuse (41) eine Quererstreckung (66) mit einer ersten Querseite (72) und einer zweiten Querseite (74) aufweist, wobei der Fluideinlass (42) und/oder der Fluidauslass (44) im Bereich der ersten Querseite (72) ausgebildet sind und wobei die Querschnittsfläche von zumindest einigen der Löcher (74) im Bereich der zweiten Querseite größer ist als jene von Löchern im Bereich der ersten Querseite (72).

6. Fluidfilteranordnung nach einem der Ansprüche 1 - 5, **dadurch gekennzeichnet, dass** der Filtereinsatz (46) ein Kassettenelement (78) aufweist, das eine Mehrzahl von Kassetten (80) bildet, die sich von dem Filtermedium (48) zum Einlassbereich (50) hin erstrecken.

7. Fluidfilteranordnung nach Anspruch 6, **dadurch gekennzeichnet, dass** zumindest einigen der Kassetten (80) genau ein Loch (58) der Lochplatte (56) zugeordnet ist.

8. Fluidfilteranordnung nach Anspruch 6 oder 7, **dadurch gekennzeichnet, dass** wenigstens einige der Kassetten (80) zusammen mit der Lochplatte (56) jeweils eine Kassettenkammer (86) bilden.

9. Fluidfilteranordnung nach einem der Ansprüche 6 - 8, **dadurch gekennzeichnet, dass** wenigstens einige der Kassetten (80) ein Volumen haben, das im Bereich von 10 mm³ bis 5000 mm³ liegt.

10. Verfahren zum Filtern eines Antriebsstrang-Fluides (62), insbesondere mittels einer Fluidfilteranordnung (40) nach einem der Ansprüche 1 - 9 mit dem Schritt,
ein Fluid (62) durch ein Filtermedium (48) hindurch zu fördern, das in einem Filtergehäuse (41) angeordnet ist, wobei das Fluid (62) auf der Einlassseite lokal beschleunigt wird, so dass es mit einer erhöhten Geschwindigkeit auf das Filtermedium (48) auftrifft, wobei der Filtereinsatz (46) eine Lochplatte (56) mit einer Mehrzahl von Löchern (58) aufweist, die in Strömungsrichtung (63) vor dem Filtermedium (48) angeordnet sind, wobei die Größe von wenigstens einem Teil der Löcher (58) dazu angepasst ist, dass Fluid (62) mit einer erhöhten Strömungsgeschwindigkeit auf das Filtermedium (48) auftrifft,
wobei die Querschnittsfläche der Löcher (58) über die Fläche des Filtermediums (48) variabel und so gewählt ist, dass die Strömungsgeschwindigkeit des Fluides (62) über der Fläche des Filtermediums (48) annähernd gleich groß ist.

11. Verfahren nach Anspruch 10, wobei das Fluid in einem in Strömungsrichtung (63) vor dem Filtermedium (48) liegenden Raum in eine Mehrzahl von Einzelströmen (79) unterteilt wird, die durch Wände von Kassetten (80) voneinander abgegrenzt sind.

## Claims

1. Fluid filter arrangement (40) for a motor vehicle drive train (10), having
- a filter housing (41), which has a fluid inlet (42) and a fluid outlet (44), allowing fluid (62) to flow in one flow direction (63) from the fluid inlet (42) to the fluid outlet (44),
- a filter insert (46), which is arranged in the filter housing (41) and divides an interior of the filter housing (41) into an inlet region (50) connected to the fluid inlet (42) and an outlet region (52) connected to the fluid outlet (44), wherein the filter insert (46) has a filter medium (48) for filtering fluid (42),
wherein the filter insert (46) has a perforated plate (56) having a plurality of holes (58), which are arranged ahead of the filter medium (48) in the flow direction (63), wherein the size of at least some of the holes (58) is adapted so that fluid (62) impinges upon the filter medium (48) at an increased flow velocity,
**characterized in that** the cross-sectional area of the holes (58) over the area of the filter medium (48) is variable and chosen in such a way that the flow velocity of the fluid (62) is approximately equal over the area of the filter medium (48).

2. Fluid filter arrangement according to Claim 1, **characterized in that** the filter medium (48) is arranged substantially horizontally.

3. Fluid filter arrangement according to Claim 1 or 2, **characterized in that** the holes (58) each have a cross-sectional area in a range of from 0.1 mm² to 20 mm², in particular in a range of from 0.2 mm² to 7 mm².

4. Fluid filter arrangement according to one of Claims 1-3, **characterized in that** the filter housing (41) has a longitudinal extent with a first longitudinal end (68) and a second longitudinal end (70), wherein the fluid inlet (42) is formed in the region of the first longitudinal end (68), wherein the fluid outlet (44) is formed in the region of the second longitudinal end (70) and wherein the cross-sectional area of at least some of the holes (58) is greater in the region of the second longitudinal end (70) than that of holes (58) in the region of the first longitudinal end (68).

5. Fluid filter arrangement according to one of Claim 1-4, **characterized in that** the filter housing (41) has a transverse extent (66) with a first transverse side (72) and a second transverse side (74), wherein the fluid inlet (42) and/or the fluid outlet (44) are formed in the region of the first transverse side (72) and wherein the cross-sectional area of at least some of the holes (74) is greater in the region of the second transverse side than that of holes in the region of the first transverse side (72).

6. Fluid filter arrangement according to one of Claims 1-5, **characterized in that** the filter insert (46) has a waffle cell element (78), which forms a plurality of waffle cells (80), which extend from the filter medium (48) to the inlet region (50).

7. Fluid filter arrangement according to Claim 6, **characterized in that** at least some of the waffle cells (80) are assigned precisely one hole (58) in the perforated plate (56).

8. Fluid filter arrangement according to Claim 6 or 7, **characterized in that** at least some of the waffle cells (80), together with the perforated plate (56), in each case form a waffle cell chamber (86).

9. Fluid filter arrangement according to one of Claims 6-8, **characterized in that** at least some of the waffle cells (80) have a volume which is in a range of from 10 mm³ to 5000 mm³.

10. Method for filtering a drive train fluid (62), in particular by means of a fluid filter arrangement (40) according to one of Claims 1-9, comprising the step of conveying a fluid (62) through a filter medium (48), which is arranged in a filter housing (41), wherein the fluid (62) is accelerated locally on the inlet side, with the result that it impinges upon the filter medium (48) at an increased velocity,
wherein the filter insert (46) has a perforated plate (56) having a plurality of holes (58), which are arranged ahead of the filter medium (48) in the flow direction (63), wherein the size of at least some of the holes (58) is adapted so that fluid (62) impinges upon the filter medium (48) at an increased flow velocity,
wherein the cross-sectional area of the holes (58) over the area of the filter medium (48) is variable and chosen in such a way that the flow velocity of the fluid (62) is approximately equal over the area of the filter medium (48).

11. Method of claim 10, wherein the fluid is divided in a space situated ahead of the filter medium (48) in the flow direction (63) into a plurality of individual flows (79), which are delimited with respect to one another by walls of waffle cells (80).

## Revendications

1. Agencement de filtre de fluide (40) pour une chaîne cinématique d'un véhicule automobile (10), comprenant
- un boîtier de filtre (41), qui présente une entrée de fluide (42) et une sortie de fluide (44), de telle sorte que du fluide (62) puisse s'écouler dans un sens d'écoulement (63) depuis l'entrée de fluide (42) jusqu'à la sortie de fluide (44),
- un insert de filtre (46) disposé dans le boîtier de filtre (41), qui divise un espace interne du boîtier de filtre (41) en une région d'entrée (50) reliée à l'entrée de fluide (42) et une région de sortie (52) reliée à la sortie de fluide (44), l'insert de filtre (46) présentant un milieu filtrant (48) pour la filtration de fluide (42),
l'insert de filtre (46) présentant une plaque perforée (56) avec une pluralité de trous (58) qui sont disposés dans le sens d'écoulement (63) avant le milieu filtrant (48), la taille d'au moins une partie des trous (58) étant adaptée de manière à ce que du fluide (62) arrive sur le milieu filtrant (48) avec une vitesse d'écoulement accrue,
**caractérisé en ce que** la surface en section transversale des trous (58) est variable sur la surface du milieu filtrant (48) et est choisie de telle sorte que la vitesse d'écoulement du fluide (62) sur la surface du milieu filtrant (48) soit approximativement uniforme.

2. Agencement de filtre de fluide selon la revendication 1, **caractérisé en ce que** le milieu filtrant (48) est disposé essentiellement horizontalement.

3. Agencement de filtre de fluide selon la revendication 1 ou 2, **caractérisé en ce que** les trous (58) présentent à chaque fois une surface en section transversale de l'ordre de 0,1 mm² à 20 mm², en particulier de l'ordre de 0,2 mm² à 7 mm².

4. Agencement de filtre de fluide selon l'une quelconque des revendications 1 à 3, **caractérisé en ce que** le boîtier de filtre (41) présente une étendue en longueur avec une première extrémité longitudinale (68) et une deuxième extrémité longitudinale (70), l'entrée de fluide (42) étant réalisée dans la région de la première extrémité longitudinale (68), la sortie de fluide (44) étant réalisée dans la région de la deuxième extrémité longitudinale (70) et la surface en section transversale d'au moins certains des trous (58) dans la région de la deuxième extrémité longitudinale (70) étant plus grande que celle des trous (58) dans la région de la première extrémité longitudinale (68).

5. Agencement de filtre de fluide selon l'une quelconque des revendications 1 à 4, **caractérisé en ce que** le boîtier de filtre (41) présente une étendue transversale (66) avec un premier côté transversal (72) et un deuxième côté transversal (74), l'entrée de fluide (42) et/ou la sortie de fluide (44) étant réalisées dans la région du premier côté transversal (72), et la surface en section transversale d'au moins certains des trous (74) dans la région du deuxième côté transversal étant supérieure à celle des trous dans la région du premier côté transversal (72).

6. Agencement de filtre de fluide selon l'une quelconque des revendications 1 à 5, **caractérisé en ce que** l'insert de filtre (46) présente un élément de cassettes (78) qui forme une pluralité de cassettes (80) qui s'étendent depuis le milieu filtrant (48) jusqu'à la région d'entrée (50).

7. Agencement de filtre de fluide selon la revendication 6, **caractérisé en ce qu'**exactement un trou (58) de la plaque perforée (56) est associé à au moins certaines des cassettes (80).

8. Agencement de filtre de fluide selon la revendication 6 ou 7, **caractérisé en ce qu'**au moins certaines des cassettes (80) forment conjointement avec la plaque perforée (56) à chaque fois une chambre de cassettes (86).

9. Agencement de filtre de fluide selon l'une quelconque des revendications 6 à 8, **caractérisé en ce qu'**au moins certaines des cassettes (80) présentent un volume qui est situé dans une plage de 10 mm³ à 5000 mm³.

10. Procédé de filtrage d'un fluide d'une chaîne cinématique (62), en particulier au moyen d'un agencement de filtre de fluide (40) selon l'une quelconque des revendications 1 à 9, comprenant l'étape consistant à
refouler un fluide (62) à travers un milieu filtrant (48), lequel est disposé dans un boîtier de filtre (41), le fluide (62) étant accéléré localement du côté de l'entrée de telle sorte qu'il arrive sur le milieu filtrant (48) avec une vitesse accrue, l'insert de filtre (46) présentant une plaque perforée (56) avec une pluralité de trous (58) qui sont disposés dans le sens d'écoulement (63) avant le milieu filtrant (48), la taille d'au moins une partie des trous (58) étant adaptée de telle sorte que du fluide (62) arrive sur le milieu filtrant (48) avec une vitesse d'écoulement accrue,
la surface en section transversale des trous (58) étant variable sur la surface du milieu filtrant (48) et étant choisie de telle sorte que la vitesse d'écoulement du fluide (62) sur la surface du milieu filtrant (48) soit approximativement uniforme.

11. Procédé selon la revendication 10, dans lequel le fluide est divisé en un espace situé dans la direction d'écoulement (63) avant le milieu filtrant (48) en une pluralité d'écoulements partiels (79) qui sont délimités les uns par rapport aux autres par des parois de cassettes (80).
